# EUROPEAN PATENT SPECIFICATION

(11) **EP 3 232 121 B1**
(45) Date of publication and mention of the grant of the patent: **09.01.2019**
(21) Application number: 17165874.3
(22) Date of filing: 11.04.2017
(51) Int. Cl.: F21V 8/00, F21S 6/00

(54) **LAMP FOR LIGHTING WITH AN ASYMMETRIC LIGHT DISTRIBUTION**
LAMPE FÜR BELEUCHTUNG MIT EINER ASYMMETRISCHEN LICHTVERTEILUNG
LAMPE D'ÉCLAIRAGE AVEC DISTRIBUTION DE LUMIÈRE ASYMÉTRIQUE

(30) Priority: 11.04.2016 IT UA20162483
(43) Date of publication of application: 18.10.2017
(73) Proprietor: ARTEMIDE S.p.A., 20122 Milano (IT)
(72) Inventor: de BEVILACQUA, Carlotta Francesca Isolina Maria, 20100 MILANO (IT); LEONI, Paolo, 20122 MILANO (IT)
(74) Representative: Cernuzzi, Daniele

(56) References cited:
- WO-A1-2013/141020
- US-A1- 2010 157 615
- US-A1- 2010 321 952

## Description

The present invention relates to a lamp for lighting, in particular for interior lighting, with an asymmetric light distribution.

The lamp of the invention is particularly suited for use in work environments, also fitted with video terminals.

In the sector of interior lighting and in particular work environments, the problem is raised of ensuring controlled light distribution, to avoid, in particular, unwanted reflections on the screens of the video terminals. Specific regulations also exist in this regard.

Various systems for supplying the required distribution of light are known. However, the known systems are not completely satisfactory as regards light intensity and light distribution and above all in terms of size and constructional complexity.

In particular, with LED lights there may also be problems regarding the range and uniformity of the lighting. To obtain uniform lighting effects and extensive illuminating surfaces it is, in fact, normally necessary to resort to complex optical systems to be associated with the LEDs.

The use of complex optical systems also involves relatively elevated dimensions, at least in some configurations, which also limit the designers' margin of freedom in creating lamps with original and attractive shapes.

On the other hand, in the sector of lighting, there is a constant search for technical solutions, which can also be incorporated into aesthetically original objects, as well as obtaining newly conceived lighting effects, because not only is the purely functional aspect vital in this sector, but also the sensorial and aesthetic aspect.

US2010321952A1 discloses a light emitting device comprising a light source, a lightguide operable to receive light from the light source, a light extraction region optically coupled to the lightguide and a substantially non-scattering region along a portion of the lightguide. In some embodiments, the device is configured to provide an asymmetric light distribution.

It is therefore an object of the present invention to provide a lamp for lighting that overcomes the stated inconveniences of the known solutions, offering, in particular, excellent light distribution with elevated performance and elevated visual comfort, also in work environments with video terminals, which is also extremely easy to make.

The present invention therefore relates to a lamp for lighting as essentially defined in the accompanying claim 1 and, with regard to its preferred features, in the dependent claims.

In this way, according to the invention, the lamp for lighting offers optimum light distribution with elevated performance and elevated visual comfort, also in work environments with video terminals, which is also extremely easy to make.

The invention is described in detail in the following non-limiting embodiments, with reference to the figures in the accompanying drawings, wherein:
- Figure 1 is a schematic perspective view of a lamp for lighting according to the invention;
- Figure 2 is a sectioned schematic view, with parts removed and parts out of scale, of the lamp in Figure 1, showing only the main components.

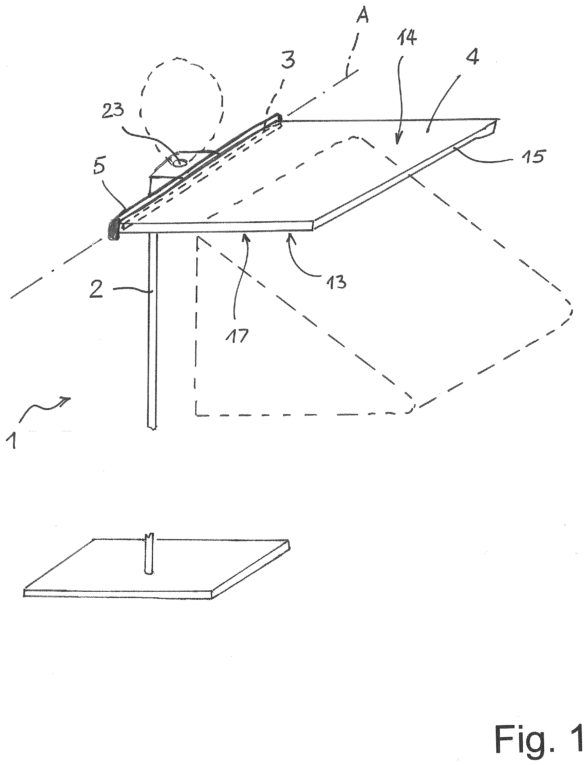

With reference to Figure 1, a lamp 1 for lighting with an asymmetric light distribution comprises a supporting structure 2, at least one light source 3, in particular a LED light source, and a light guide panel 4 positioned in front of the light source 3 for receiving the light emitted by the light source 3.

The lamp 1 is for example (but not necessarily) a floor lamp, therefore the supporting structure 2 comprises a pedestal base, however it is understood that the lamp 1 may be of a different typology (hanging, wall, table, etcetera) and so, consequently, the supporting structure 2 can be of various shapes.

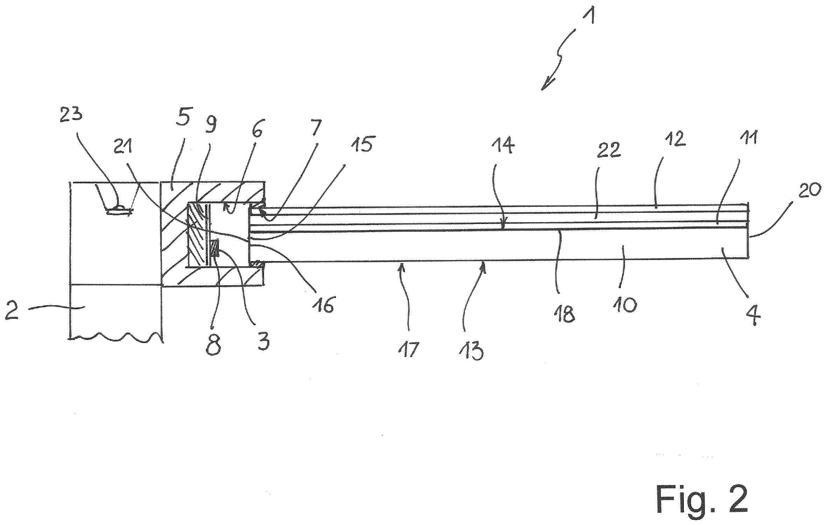

Also with reference to Figure 2, the supporting structure 2 comprises a casing 5 that houses the light source 3.

The casing 5 extends substantially along an axis A and is shaped, for example, as an essentially rectilinear hollow bar, having a substantially C-shaped cross section; the casing 5 has an internal cavity 6, which extends along the axis A and houses the light source 3, and a frontal longitudinal aperture 7 in the shape of a slit, parallel to the axis A.

The light source 3 is elongated longitudinally along the axis A and is substantially rectilinear.

In particular, the light source 3 is a LED light source and comprises a plurality of LEDs 8 arranged side-by-side and spaced apart from one another along the casing 5 and along the axis A (therefore, in this case, along a substantially rectilinear axis).

Advantageously, the LEDs 8 are arranged on a LED strip, made up of a band, for example flexible, that bears a series of LEDs 8 connected by a circuit or an electronic board.

In particular, the LEDs 8 are mounted onto a support 9 located in the cavity 6.

The casing 5 also houses all wires and components for supplying and controlling the light source 3 (known and not illustrated for simplicity) and also serves advantageously as a heatsink and is therefore realised with heat conducting material, for example aluminium.

The light source 3 and in particular the LEDs 8 are arranged on a back wall of the cavity 6, facing the opening 7.

The light guide panel 4 is supported by the casing 5 (or possibly by a frame connected to the casing 5) and it is a substantially flat panel, in other words, it extends principally in width and length and has a thickness that is significantly lower than the width and length.

The light guide panel 4 comprises: a monolithic plate 10 in substantially transparent material, for example glass or polymeric material, such as PC or PMMA or the like (preferably, PMMA); an optical film 11 coupled (laminated) to the plate 10; and optionally (not necessarily) a protecting cover film 12, positioned over the optical film 11 and spaced apart from it.

The plate 10 is a flat plane plate, with two opposite larger faces 13, 14, which are substantially level and parallel, and a perimeter edge 15 (defining the thickness of the plate 10) that joins the faces 13, 14; in the example shown, the plate 10 is substantially quadrangular, so the perimeter edge 15 is made up of four lateral edges 16 defining respective portions of the perimeter edge 15.

In use, the face 13 is a lower face of the plate 10 facing a work surface to be lit and defining a main emission surface 17 of the lamp 1; the opposite face 14 is an upper face of the plate 10.

The faces 13, 14 are substantially flat, even and smooth.

The light source 3 faces the perimeter edge 15 and specifically one lateral edge 16.

In use, the optical film 11 is positioned on the upper face 14 of the plate 10 and it is also substantially plane and parallel to the faces 13, 14.

The optical film 11 is made, for example, of a substantially transparent polymeric material and is laminated on the plate 10.

The optical film 11 is provided with an optical pattern 18, for example engraved, printed, screen-printed etc., which creates unevenness in the optical film 11 and it is configured so as to extract from the light guide panel 4 through the face 13 (that is from the emission surface 17 of the lamp 1) the light emitted by the light source 3 and entered in the plate 10 through the lateral edge 16.

The optical film 11 and in particular its optical pattern 18 are configured so as to direct substantially all of the light crossing the plate 10 towards the face 13 and in a substantially perpendicular direction to the lateral edge 16.

In particular, the optical film 11 has an optical pattern 18 configured so as to distribute the light with an asymmetric distribution in relation to the emission surface 17 and in particular asymmetric in relation to a plane perpendicular to the emission surface 17 and parallel to the axis A (that is the axis along which the light source 3 extends).

Specifically, the light emitted by the lamp 1 through the emission surface 17 has a distribution that increases towards a distal end 20, opposite to a proximal end 21 facing the light source 3 of the light guide panel 4.

The cover film 12, supported, for example, by the casing 5, is plane and parallel to the optical film 11 and to the faces 13, 14 of the plate 10.

The cover film 12, for example substantially opaque, is positioned over the optical film 11 so as to be not in contact with the optical film 11 but separated from the optical film 11 by an empty space defining an air gap 22.

Optionally, in use, the lamp 1 has an auxiliary light source 23 facing upwards for indirect (for example, Lambertian) emission.

The light source 3 and the auxiliary light source 23 are optionally supplied and controlled independently of each other.

In use, the light source 3 emits light on the lateral edge 16 of the plate 10; the light emitted by the light source 3 (elongated along the axis A and along the lateral edge 16, being made of a series of LEDs 8 arranged side-by-side), enters the light guide panel 4 laterally and, specifically, enters the plate 10 through the lateral edge 16.

The light spreads into the plate 10 and is extracted from the plate 10 through the face 13 defining the emission surface 17 of the lamp 1, by means of the optical pattern 18 on the optical film 11.

The optical film 11 and the optical pattern 18, as stated previously, are configured so as to direct substantially all of the light crossing the plate 10 towards the face 13, in a substantially perpendicular direction to the lateral edge 16.

Finally, it is understood that further changes and variations can be made to the LED lighting lamp described and illustrated here, which do not go beyond the scope of the accompanying claims.

## Claims

1. A lamp (1) for lighting with an asymmetric light distribution, comprising a casing (5) extending substantially along an axis (A), at least one light source (3) housed in the casing (5), and a substantially flat light guide panel (4) positioned in front of the light source (3) for receiving light emitted by the light source (3); the light source (3) being a LED light source longitudinally elongated along the axis (A) and substantially rectilinear and comprising a plurality of LEDs (8) arranged side-by-side and spaced apart from one another along the casing (5); the light guide panel (4) comprising a plate (10) made of a substantially transparent material and having a lateral edge (16), parallel to the axis (A) and facing the light source (3) for receiving the light emitted by the light source (3); and an optical film (11) coupled to the plate (10); the optical film (11) being provided with an optical pattern (18) configured so as to extract from the light guide panel (4) through a first face (13) of the plate (10) defining an emission surface (17) of the lamp (1) the light emitted by the light source (3) and entered in the plate (10) through the lateral edge (16); the lamp being **characterized in that** the optical pattern (18) is configured so as to distribute the light with an asymmetric light distribution in relation to the emission surface (17) and asymmetric in relation to a plane perpendicular to the emission surface (17) and parallel to the axis (A), that is the axis along which the light source (3) extends; and **in that** said optical pattern (18) is configured so as the light emitted by the lamp (1) through the emission surface (17) has a distribution that increases towards a distal end (20), opposite a proximal end (21) facing the light source (3), of the light guide panel (4).

2. The lamp according to claim 1, wherein the optical film (11) is configured so as to direct substantially all of the light entering the plate (10) towards said first face (13) and in a direction substantially perpendicular to said first face (13) and to said lateral edge (16).

3. The lamp according to one of the preceding claims, wherein the optical film (11) is positioned on a second face (14), opposite said first face (3) and which is the upper face in use, of the plate (10).

4. The lamp according to claim 3, wherein the optical film (11) is laminated on said second face (14) of the plate (10).

5. The lamp according to one of the preceding claims, wherein the light guide panel (4) also comprises a protecting cover film (12), positioned over the optical film (11) and spaced therefrom by an air gap.

## Patentansprüche

1. Lampe (1) zur Beleuchtung mit einer asymmetrischen Lichtverteilung, umfassend ein Gehäuse (5), das sich im Wesentlichen entlang einer Achse (A) erstreckt, mindestens eine Lichtquelle (3), die im Gehäuse (5) untergebracht ist, und ein im Wesentlichen flaches Lichtführungspaneel (4), das vor der Lichtquelle (3) angeordnet ist, um Licht, das durch die Lichtquelle (3) ausgestrahlt wird, aufzunehmen; wobei die Lichtquelle (3) eine LED-Lichtquelle ist, die sich längs der Achse (A) und im Wesentlichen geradlinig erstreckt und mehrere LEDs (8) umfasst, die nebeneinander und voneinander beabstandet entlang des Gehäuses (5) angeordnet sind; wobei das Lichtführungspaneel (4) eine Platte (10) umfasst, die aus einem im Wesentlichen transparenten Material hergestellt ist und einen Seitenrand (16) besitzt, der parallel zur Achse (A) und der Lichtquelle (3) zugewandt ist, um das durch die Lichtquelle (3) ausgestrahlte Licht aufzunehmen; und eine optische Schicht (11), die an die Platte (10) gekoppelt ist, umfasst; wobei die optische Schicht (11) mit einem optischen Muster (18) versehen ist, das konfiguriert ist, aus dem Lichtführungspaneel (4) durch eine erste Fläche (13) der Platte (10), die eine Emissionsoberfläche (17) der Lampe (1) definiert, das durch die Lichtquelle (3) ausgestrahlte und durch den Seitenrand (16) in die Platte (10) eingetretene Licht zu extrahieren; wobei die Lampe **dadurch gekennzeichnet ist, dass** das optische Muster (18) konfiguriert ist, das Licht mit einer asymmetrischen Lichtverteilung in Bezug auf die Emissionsoberfläche (17) und asymmetrisch in Bezug auf eine Ebene zu verteilen, die senkrecht zur Emissionsoberfläche (17) und parallel zur Achse (A) ist, die jene Achse ist, entlang der sich die Lichtquelle (3) erstreckt; und dadurch, dass das optische Muster (18) derart konfiguriert ist, dass das durch die Lampe (1) über die Emissionsoberfläche (17) ausgestrahlte Licht eine Verteilung besitzt, die hin zu einem distalen Ende (20) des Lichtführungspaneels (4), gegenüber einem der Lichtquelle (3) zugewandten proximalen Ende (21), ansteigt.

2. Lampe nach Anspruch 1, wobei die optische Schicht (11) konfiguriert ist, im Wesentlichen das gesamte Licht, das in die Platte (10) eintritt, zur ersten Fläche (13) und in eine im Wesentlichen zur ersten Fläche (13) und zum Seitenrand (16) senkrechte Richtung zu leiten.

3. Lampe nach einem der vorhergehenden Ansprüche, wobei die optische Schicht (11) auf einer zweiten Fläche (14) der Platte (10), die der ersten Fläche (3) gegenüberliegt und in Verwendung die Oberseite ist, positioniert ist.

4. Lampe nach Anspruch 3, wobei die optische Schicht (11) auf die zweite Fläche (14) der Platte (10) laminiert ist.

5. Lampe nach einem der vorhergehenden Ansprüche, wobei das Lichtführungspaneel (4) ferner eine schützende Abdeckschicht (12) umfasst, die über der optischen Schicht (11) und davon durch einen Luftspalt beabstandet positioniert ist.

## Revendications

1. Lampe (1) pour un éclairage avec une distribution de lumière asymétrique, comprenant un boîtier (5) s'étendant sensiblement le long d'un axe (A), au moins une source de lumière (3) logée dans le boîtier (5), et un panneau de guidage de lumière sensiblement plat (4) positionné devant la source de lumière (3) pour recevoir la lumière émise par la source de lumière (3) ; la source de lumière (3) étant une source de lumière à LED longitudinalement allongée le long de l'axe (A) et sensiblement rectiligne et comprenant une pluralité de LED (8) agencées côte à côte et espacées les unes des autres le long du boîtier (5) ;
le panneau de guidage de lumière (4) comprenant une plaque (10) constituée d'un matériau sensiblement transparent et ayant un bord latéral (16), parallèle à l'axe (A) et faisant face à la source de lumière (3) pour recevoir la lumière émise par la source de lumière (3) ; et
un film optique (11) couplé à la plaque (10) ; le film optique (11) étant pourvu d'un motif optique (18) configuré de façon à extraire du panneau de guidage de lumière (4), à travers une première face (13) de la plaque (10) définissant une surface d'émission (17) de la lampe (1), la lumière émise par la source de lumière (3) et introduite dans la plaque (10) à travers le bord latéral (16) ;
la lampe étant **caractérisée en ce que** le motif optique (18) est configuré de façon à distribuer la lumière avec une distribution de lumière asymétrique par rapport à la surface d'émission (17) et asymétrique par rapport à un plan perpendiculaire à la surface d'émission (17) et parallèle à l'axe (A), c'est-à-dire l'axe le long duquel s'étend la source de lumière (3) ; et
**en ce que** ledit motif optique (18) est configuré de telle sorte que la lumière émise par la lampe (1) à travers la surface d'émission (17) a une distribution qui augmente vers une extrémité distale (20), à l'opposé d'une extrémité proximale (21) faisant face à la source de lumière (3), du panneau de guidage de lumière (4).

2. Lampe selon la revendication 1, le film optique (11) étant configuré de façon à diriger sensiblement la totalité de la lumière entrant dans la plaque (10) vers ladite première face (13) et dans une direction sensiblement perpendiculaire à ladite première face (13) et audit bord latéral (16).

3. Lampe selon l'une des revendications précédentes, le film optique (11) étant positionné sur une seconde face (14), opposée à ladite première face (3) et qui est la face supérieure lors de l'utilisation, de la plaque (10).

4. Lampe selon la revendication 3, le film optique (11) étant stratifié sur ladite seconde face (14) de la plaque (10) .

5. Lampe selon l'une des revendications précédentes, le panneau de guidage de lumière (4) comprenant également un film de recouvrement de protection (12), positionné sur le film optique (11) et espacé de celui-ci par un entrefer.
